Europäisches Patentamt

European Patent Office

Office européen des brevets

(19)

(11) **EP 0 394 959 B1**

(12) **EUROPÄISCHE PATENTSCHRIFT**

(45) Veröffentlichungstag und Bekanntmachung des Hinweises auf die Patenterteilung:
**08.07.1998 Patentblatt 1998/28**

(51) Int Cl.$^6$: **G06T 5/40**

(21) Anmeldenummer: **90107763.6**

(22) Anmeldetag: **24.04.1990**

(54) **Verfahren zur Bildauswertung**

Image analysis method

Méthode d'analyse d'image

(84) Benannte Vertragsstaaten:
**BE CH DE FR GB IT LI NL SE**

(30) Priorität: **25.04.1989 DE 3913620**

(43) Veröffentlichungstag der Anmeldung:
**31.10.1990 Patentblatt 1990/44**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder: **Korn, Axel, Dr.**
**D-7500 Karlsruhe 41 (DE)**

(56) Entgegenhaltungen:
**WO-A-87/06376**

- **PATENT ABSTRACTS OF JAPAN vol. 10, no. 52 (P-432)28. Februar 1986**

## Beschreibung

Die Erfindung bezieht sich auf ein Verfahren zur Bildauswertung nach dem Oberbegriff des Anspruchs 1, wie er aus dem Abstract der JP 60195685 bekannt ist.

Auf dem Gebiet des "Maschinensehens" gibt es zahlreiche Verfahren zur Berechnung struktureller Merkmale wie Kanten, Ecken und Flächen aus Grauwertbildern, die z.B. über Produktionsregeln mit bekannten Testmustern verglichen werden können. Daneben gibt es statistische Verfahren, die sich insbesondere bei der Textur- und Schriftzeichenerkennung bewährt haben. Weit verbreitet ist die Korrelationsmethode für den Bildvergleich, wobei meistens eine zweidimensionale Korrelation der Grauwerte von zwei Bildern durchgeführt wird. Der Nachteil der geschilderten Methoden ist, daß entweder der Aufwand bei der Anwendung auf beliebige natürliche Bilder zu groß ist oder die oben geschilderten Invarianzeigenschaften nicht vorhanden sind.

Aus der obengenannten Patentanmeldung ist eine Einrichtung zur Bildauswertung von Bildern durch Analyse der Richtungen von Grauwertgradienten bekannt, wobei gespeicherte Bildmuster in dem auszuwertenden Bild ermittelt werden. Es wird das Histogramm der Gradientenrichtungen gebildet und der Vergleich mit dem Histogramm des gespeicherten Bildmusters durchgeführt.

Mittels des o.a. bekannten Verfahrens ist jedoch eine Analyse von Bildern nur beschränkt möglich, insbesondere sind einzelne zu erkennende Objekte im Bild, z.B. Texturunterscheidungen in Textilmustern, Fehler in bearbeiteten Oberflächen, fahrende Fahrzeuge in Videoaufzeichnungen, nicht zu ermitteln.

Aufgabe der Erfindung ist es, das bekannte Verfahren dahingehend zu verbessern, daß Testmuster in auszuwertenden Bildern erkannt werden, wobei die Umgebung der Testmuster zu keiner Verschlechterung der Ergebnisse führen soll.

Diese Aufgabe wird durch das Verfahren nach Anspruch 1 gelöst vorteilhafte Ausgestaltungen sind in den Unteransprüchen gekennzeichnet.

Das erfindungsgemäße Verfahren baut auf dem o.a. Verfahren auf; dabei werden Bilddaten durch Anwendung eines speziellen Gradientenoperators auf beliebige Grauwertbilder erzeugt. Man erhält ein Bild, in welchem für jeden Bildpunkt der Betrag und die Richtung des Grauwertgradienten mit jeweils 8 bit Auflösung vorliegen. Die Gradientenrichtung ist invariant gegenüber Addition und Multiplikation der Bildfunktion mit Konstanten. Kontrastumkehr bedeutet Addition von 180 Grad zu jedem Richtungswert.

Für den Bildvergleich wird zunächst das Histogramm der Gradientenrichtungen in einem interessierenden Bildfenster gebildet, wobei auf die Gesamtzahl der verwendeten Bildpunkte in diesem Fenster normiert wird. Man erhält eine eindimensionale Funktion: Häufigkeit von Winkelwerten in Prozent vs. Winkelwert. Zur Reduktion von Rauschen wird das Histogramm durch Faltung mit einer eindimensionalen Gaußfunktion geglättet. Die Standardabweichung wird interaktiv eingelesen.

Danach wird der Vergleich mit anderen Bildfenstern durch Kreuzkorrelation der eindimensionalen Histogramme durchgeführt. Nach jeder Korrelation werden die Winkelwerte auf der Abzisse des Referenzhistogramms jeweils um $1 = 2°$ (oder einen beliebigen Wert modulo 360) erhöht und mit diesem Histogramm erneut eine Kreuzkorrelation durchgeführt und das 180 mal. Mit Hilfe dieses wichtigen Schrittes werden mögliche Drehungen des Vergleichs - gegen das Referenzmuster quantitativ erfaßt durch Bestimmung des maximalen Kreuzkorrelationskoeffizienten in Abhängigkeit vom Drehwinkel. Hierdurch wird auch Invarianz gegenüber Kontrastumkehr erreicht (s.o.). Durch Normierung auf die Gesamtzahl der berücksichtigten Bildpunkte - die Häufigkeit bestimmten Richtungen wird in Prozent angegeben - wird eine Größeninvarianz erreicht.

Bei der Suche in Bildern durch einstellbare Verschiebung von Bildfenstern, deren Histogramme mit der Referenz kreuzkorreliert werden, wird für jede Fensterposition der Kreuzkorrelationskoeffizient berechnet. Anschließend wird vorzugsweise das Bildfenster mit dem größten Zahlenwert (oberhalb einer einstellbaren Schwelle) ausgewertet oder auch benachbarte mit ähnlichen Werten.

Das geschilderte Verfahren hat folgende <u>Vorteile</u> gegenüber bestehenden technischen Verfahren:

1. Es werden nicht zweidimensionale, sondern eindimensionale Funktionen (Histogramme) korreliert, die sich leicht berechnen lassen und deren Wertebereich unabhängig von der Größe der verwendeten Bilder ist. Dadurch ergibt sich eine erhebliche Aufwandsreduktion, welche technische Anwendungen in Echtzeit mit Hilfe heute verfügbarer elektronischer Bausteine ermöglicht.

2. Dadurch, daß nicht (wie beim Bildvergleich üblich) Grauwerte sondern die geglätteten Häufigkeiten von Winkelwerten korreliert werden, ergeben sich Invarianzen gegenüber Drehungen, Größen- und Kontraständerungen. Dadurch erhält man ein robustes Detektionsverfahren, bei welchem auch der Einfluß der Umgebung der zu detektierenden Objekte bisher zu keiner nennenswerten Verschlechterung der Ergebnisse geführt hat.

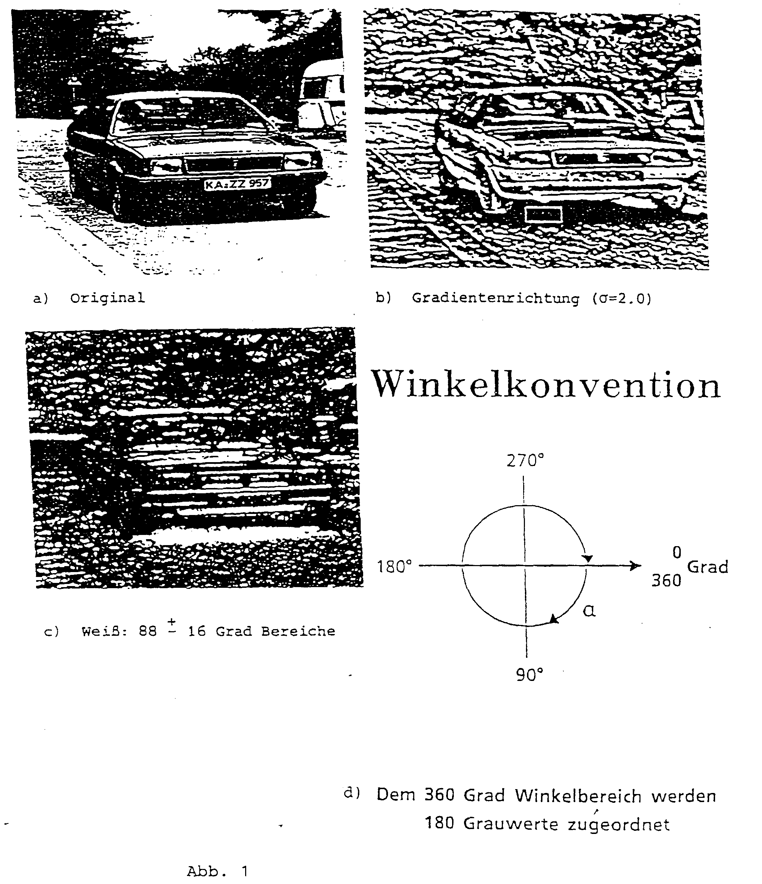

Im folgenden wird das bekannte Verfahren zum besseren Verständnis der Erfindung anhand der Abb. 1 erläutert.

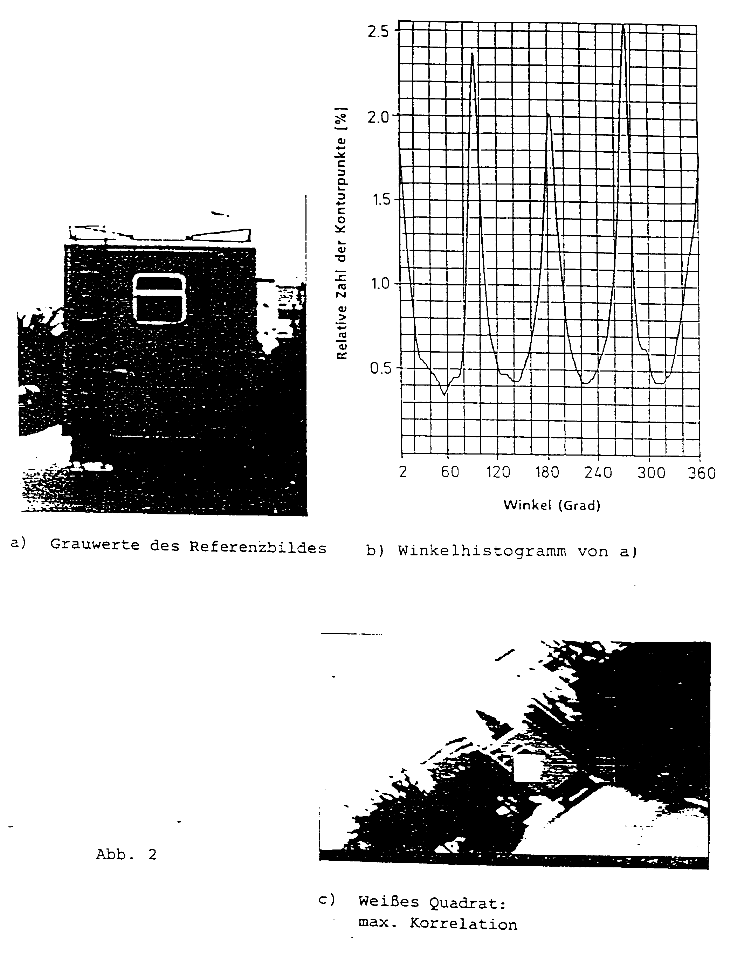

Die Erfindung wird dann anhand der Abb. 2 dargestellt.

In der o.a. Literaturstelle wird ausführlich auf die Problematik der Beschreibung von Grauwertänderungen mit Hilfe von Gradientenfiltern variabler Größe eingegangen. Es wurde eine Filterbank vorgeschlagen, in welcher über ein Auswahlkriterium automatisch die jeweils beste Maskengröße bestimmt werden kann. Aus Aufwandsgründen sollte man sich jedoch auf wenige Maskengrößen beschränken, welche mit Hilfe von a priori Wissen bez. der zu bearbeitenden Szene festgelegt werden können. Der Grundgedanke für das im folgenden beschriebene Verfahren besteht darin, durch eine relativ große Filtermaske Bildrauschen und Texturen soweit zu eliminieren, daß zusammenhängende Flächen mit möglichst homogenen Gradientenrichtungen entstehen. Diese Flächen sollten wesentlich grösser sein als der verwendete Faltungskern. Örtlich sich langsam ändernde Grauwertverläufe werden aufgrund ihrer niedrigen Ortsfrequenz kaum beeinflußt und lassen sich in dem bandpaßgefilterten Bild relativ einfach durch die einheitliche Gradienteneinrichtung innerhalb des ansteigenden bzw. abfallenden Bereiches der Grauwertfläche detektieren. Schatten und Schattierungen führen zu einem signifikanten Maximum im Histogramm der Gradientenrichtungen. Dieses Maximum kann in Verbindung mit einem gewissen Toleranzbereich dazu benutzt werden, zusammenhängende Flächen im Bildbereich zu gewinnen und als mögliche Schatten- oder Schattierungsbereiche zu charakterisieren.

Zur Gradientenberechnung bei den in Abb. 1 gezeigten Beispielen wurden 11 x 13 Masken verwendet, das entspricht einer Standardabweichung von $\sigma = 2.0$ für das Gradientenfilter (normierte Ableitung einer Gaußfunktion).

Bei dieser Maskengröße wird das Digitalisierungsrauschen stark vermindert. Die Maske dient zusätzlich zur Reduktion störender Texturen innerhalb von Schatten-/Schattierungsbereichen, wobei die Größe der Abschwächung von den betreffenden Ortsfrequenzen abhängt.

Den weiteren Überlegungen wird die Häufigkeitsverteilung von Winkelwerten in verschiedenen Bildfenstern zugrundegelegt, deren Größe und Position einstellbar ist. Für Schatten und Schattierungen wird eine Vorzugsrichtung der Gradientenrichtung in einem Bildbereich erwartet, der deutlich größer als der Faltungskern sein sollte.

Für das Beispiel des PKW in Abb. 1a veranschaulichen Abb. 1b und c) die beschriebene Vorgehensweise. In b) sind die helligkeitskodierten Gradientenrichtungen (siehe Beschreibung weiter unten) dargestellt. Die Konvention für den Gradientenwinkel geht aus Abb. 1d hervor. Die Gradientenrichtung ist so festgelegt, daß der Vektor stets von dunkel nach hell zeigt, wobei der Winkel im Uhrzeigersinn zunimmt.

In Abb. 1c ist zusätzlich die Maßnahme b) des Anspruchs 1 bildlich dargestellt.

Die Auswertung des Histogramms für den markierten Bildausschnitt in b) ergibt, daß 95 % der Bildpunkte Winkelwerte im Bereich 88 ± 16 Grad haben. Diese Winkelwerte sind in c) weiß dargestellt. Als größter zusammenhängender Bereich ergibt sich der Schatten vor dem PKW. Wie aufgrund der Beleuchtungsbedingungen zu erwarten war, ergeben sich zusätzliche Bereiche, z.B. auf der Kühleroberfläche, welche Hinweise auf das Vorhandensein langsam veränderlicher Grauwertänderungen liefern.

Im Unterschied zu der bekannten Vorgehensweise werden erfindungsgemäß nicht signifikante Maxima des Winkelhistogramms ausgewertet, sondern das vollständige Histogramm der Gradientenrichtungen eines vorgegebenen Grauwertmusters als Modell oder Referenzmuster verwendet. Die größte Ähnlichkeit mit einem solchen Referenzmuster wird durch eine Kreuzkorrelation mit den Winkelhistogrammen anderer Grauwertmuster (Vergleichsmuster in einem Suchbild) ermittelt. Zunächst wird das Histogramm der Gradientenrichtungen in einem interessierenden Bildbereich berechnet. Man erhält eine eindimensionale Funktion: Häufigkeit von Winkelwerten vs. Winkel (Grad). Zur Rauschverminderung wird das Histogramm durch Faltung mit einer eindimensionalen Gaußfunktion, deren Breite einstellbar ist, geglättet. In Abb. 2b ist ein solches geglättetes Histogramm für die Gradientenrichtungen ($\sigma = 1.0$) des Kastenwagens in a) dargestellt. Die Glättung erfolgte mit einer 1 x 9 Maske ($\sigma = 2.0$). Die vier Maxima des Histogramms bei 92, 180, 270 und 360 Grad repräsentieren die vertikel und horizontal orientierten Vorzugsrichtungen des Fahrzeugs.

Drehungen des Vergleichs gegenüber dem Referenzmuster lassen sich sehr einfach dadurch berücksichtigen, daß nach jeder Korrelation die Winkelwerte auf der Abzisse eines der beiden zu korrelierenden Histogramme jweils um 1 oder einen beliebigen anderen Wert modulo 360 Grad erhöht werden und mit diesem Histogramm erneut eine Kreuzkorrelation durchgeführt wird. Mit Hilfe dieses Schrittes werden mögliche Drehungen der o.g. Muster quantitativ erfaßt durch Bestimmung des maximalen Wertes des Kreuzkorrelationskoeffizienten in Abhängigkeit von der oben durchgeführten Translation, welche dem Drehwinkel entspricht.

Zur Verdeutlichung der beschriebenen Vorgehensweise soll das folgende Beispiel dienen. Abb. 2a ist ein Ausschnitt aus dem 1. Bild einer Bildserie, in welcher sich der Kastenwagen weg von der Kamera bewegt. Das geglättete Histogramm der Gradientenrichtungen von a) ist in Abb. 2b dargestellt. Dieses Histogramm wurde als Referenzmuster verwendet, um das Fahrzeug im 300. Bild dieser Bildfolge automatisch zu lokalisieren. Trotz einer Größenänderung von 3:1 des Fahrzeugs und einer (künstlich) durchgeführten Drehung von 45 Grad, befindet sich der Kastenwagen weitgehend innerhalb des Fensters mit dem größten Kreuzkorrelationskoeffizienten r = 0.869. Die Mitte dieses 90 Spalten und 150 Zeilen großen Vergleichsmusters ist in Abb. 2c durch ein weißes Rechteck markiert. Zusätzlich erhält man das Ergebnis, daß der höchste Kreuzkorrelationskoeffizient mit dem um 46 Grad verschobenen Referenzhistogramm erzielt wurde. Die übrigen Rechtecke markieren die Mitten weiterer Vergleichsmuster in diesem 343 Spalten x 256 Zeilen großen Suchbild, in welchem mit einer Schrittweite von 70 Spalten und 80 Zeilen ein 90 x 150 Bildfenster zur Erzeugung von 8 (sich überlappenden) Vergleichsmustern automatisch verschoben wurde. Der Kreuzkorrelationskoeffizient r wird nach folgender bekannten Vorschrift ermittelt, wobei sich die x-Werte auf die Daten des Referenzmusters und die y-Werte auf die Daten des Vergleichsmusters beziehen:

$$r = \frac{\sum_i (x(i)-x) \cdot (y(i)-y)}{\sqrt{\sum_i (x(i)-x)^2 \ \sum_i (y(i)-y)^2}} \quad ;$$

*x, y: Mittelwerte*

**Patentansprüche**

1. Verfahren zur Bildauswertung von Bildern einer Videokamera oder eines Fernsehbildes mittels einer Auswerteeinrichtung durch Analyse der Richtungen von Grauwertgradienten, wobei gespeicherte Bildmuster, z.B. Textilmuster oder Fahrzeuge, in dem auszuwertenden Bild ermittelt werden, die Grauwertgradienten des Bildes normiert werden und das Histogramm der Gradientenrichtungen in einem vordefinierten Fenster des auszuwertenden Bildes gebildet wird, in dem die Häufigkeit der Gradientenwinkelwerte in Prozent gegen den Winkelwert, z.B. in einer Tabelle, festgelegt werden,
**dadurch gekennzeichnet**,
daß

a) zusätzlich das Histogramm des Betrages des Grauwertgradienten und/oder des Grauwertes gebildet wird,
b) die Kreuzkorrelation mit dem Histogramm des gespeicherten Bildmusters durchgeführt wird,
c) der Winkelwert des Bildmusters um 1 oder einen beliebigen anderen Wert modulo 360 Grad erhöht und dieses neue Histogramm mit dem Bild kreuzkorreliert wird,
d) die Maßnahme c 360 mal oder entsprechend weniger oft wiederholt wird,
e) das Bildfenster und der Winkelwert mit der höchsten Übereinstimmung der Kreuzkorrelation ermittelt werden.

2. Verfahren nach Anspruch 1,
**dadurch gekennzeichnet,**
daß das Histogramm der Gradientenrichtungen durch Faltung mit einer Gaußfunktion geglättet wird.

3. Verfahren nach Anspruch 2,
**dadurch gekennzeichnet**,
daß Faltungskerne von 5 x 7 oder 11 x 13 Elemente verwendet werden.

**Claims**

1. Method for image evaluation of video camera pictures or of a television image by means of an analysis device by analysing the directions of half-tone gradients, stored frames e.g. texture patterns or carriers, being determined in the picture which is to be evaluated, the half-tone gradients of the picture being scaled and the histogram of the gradient directions being formed in a pre-determined aperture of the picture which is to be evaluated and in which the frequency of gradient angle values is established as a percentage of the angle value e.g. in a table,
**characterised in that**

a) in addition, the histogram of the amount of the half-tone gradient and/or of the grey-scale value is formed,

b) the cross-correlation is implemented with the histogram of the stored picture pattern,

c) the angle value of the picture pattern is increased by one, or another arbitrary value modulo 360 degrees and this new histogram is cross-correlated with the picture,

d) the measure is repeated about 360 times or correspondingly less frequently,

e) the image aperture and the angle value are calculated with the greatest degree of coincidence of the cross-correlation.

2. Method according to claim 1,
characterised in that
the histograms of the gradients of the directions are equalised by means of an integral convolution with the aid of a Gaussian function.

3. Method according to claim 2,
characterised in that
a number of 5 x 7 or 11 x 13 elements of the integral convolution are used.

**Revendications**

1. Procédé d'exploitation d'image d'une caméra vidéo ou d'une image de télévision à l'aide d'une installation d'exploitation, par l'analyse des directions des gradients des niveaux de gris, selon lequel des modèles d'images mis en mémoire par exemple des modèles textiles ou de véhicules, sont déterminés dans l'image à exploiter, selon lequel on normalise les gradients de niveau de gris de l'image et on forme l'histogramme des directions de gradients dans une fenêtre prédéfinie de l'image à exploiter, en fixant la fréquence des valeurs angulaires des gradients en pourcentage par rapport à la valeur angulaire, par exemple d'un tableau,
caractérisé en ce que

a) en plus, on forme l'histogramme de la valeur des gradients de niveau de gris et/ou du niveau de gris,
b) on effectue la corrélation croisée avec l'histogramme du modèle d'image mis en mémoire,
c) on augmente la valeur angulaire du modèle d'image de 1° ou de n'importe quelle autre valeur modulo 360° et on effectue la corrélation de ce nouvel histogramme avec l'image,
d) on répète l'opération 360 fois ou de manière moindre,
e) on détermine la fenêtre de l'image et la valeur angulaire ayant la concordance la plus élevée de la correction croisée.

2. Procédé selon revendication N° 1,
caractérisé en ce que
l'histogramme sera égalisée d'une convolution intégrale avec une function de Gauß.

3. Procédé selon revendication N°2,
caractérisé en ce que
des eléments de la convolution intégrale de 5×7 ou 11×13 eléments seront utilisés.

a) Original

b) Gradientenrichtung (σ=2.0)

c) Weiß: 88 $\pm$ 16 Grad Bereiche

## Winkelkonvention

d) Dem 360 Grad Winkelbereich werden 180 Grauwerte zugeordnet

Abb. 1

a) Grauwerte des Referenzbildes

b) Winkelhistogramm von a)

Abb. 2

c) Weißes Quadrat:
   max. Korrelation